# FASCICULE DE BREVET EUROPEEN

(11) **EP 3 542 892 B1**
(45) Date de publication et mention de la délivrance du brevet: **09.12.2020**
(21) Numéro de dépôt: 19164654.6
(22) Date de dépôt: 22.03.2019
(51) Int. Cl.: B01F 1/00, B01F 3/08, B01F 7/00, B01F 7/16, C02F 1/52, C02F 1/66

(54) **PROCÉDÉ ET INSTALLATION POUR LE TRAITEMENT D'EAU**
VERFAHREN UND ANLAGE ZUR WASSERAUFBEREITUNG
METHOD AND INSTALLATION FOR WATER TREATMENT

(30) Priorité: 23.03.2018 FR 1852517
(43) Date de publication de la demande: 25.09.2019
(73) Titulaire: LAB SA, 69007 Lyon (FR)
(72) Inventeur: SIRET, Bernard, 69200 Venissieux (FR); TABARIES, Frank, 83430 Saint Mandrier sur Mer (FR)
(74) Mandataire: Lavoix

(56) Documents cités:
- KR-A- 20030 076 549
- US-A- 3 814 396
- US-A1- 2004 240 315
- US-A1- 2015 352 504

## Description

La présente invention concerne un procédé et une installation pour le traitement d'eau.

L'industrie génère des eaux qui nécessitent un traitement avant de pouvoir être réutilisées ou retournées au milieu naturel. Pratiquement toutes les industries sont concernées et on peut citer, à titre d'exemples non limitatifs, les industries minières et les industries d'incinération employant des laveurs humides.

Ces eaux à traiter peuvent contenir des sels comme les sulfates et les chlorures, mais aussi des métaux lourds. Afin d'épurer ces eaux de beaucoup de ces polluants, on fait appel à des traitements d'eau complexes, mettant en œuvre un nombre significatif d'étapes, en particulier des opérations de précipitation qui sont par exemple réalisées par changement de pH ou de température. Souvent, la salinité, ou bien la force ionique qui est la conséquence directe de la salinité, est élevée, si bien que les situations de sursaturation sont fréquentes : des changements de température, également fréquents, vont modifier la solubilité des sels et donner également des situations propices au dépassement de la solubilité, et donc à la précipitation d'espèces. Par exemple, dans l'industrie de l'incinération, le traitement d'eau associé est souvent appliqué à des eaux saturées en gypse ou en carbonate de calcium, de sorte que la précipitation de ces espèces y est fréquente.

La problématique liée à de telles précipitations n'est pas tant que des précipités vont se former, car ceci peut être désiré, mais en ce que la précipitation peut avoir lieu de façon anarchique, avec un retard. Ainsi, au lieu de se produire de manière contrôlée et dans une unité prévue à cet effet, par exemple un bac ou un cristallisoir, la précipitation va se déclencher en aval de là où on souhaite qu'elle se produise, notamment dans la tuyauterie et les unités situées en aval, plus généralement là où elle n'est pas désirée. Cette précipitation anarchique conduit à des constructions ou des encroutages pouvant altérer les installations, par exemple obstruer des conduits, et, plus généralement, peuvent nuire au bon fonctionnement des procédés et des équipements de traitement d'eau mis en œuvre.

On notera que cette problématique de précipitations anarchiques n'est ni concernée, ni résolue par des systèmes de bullage de gaz, tels que ceux proposés par exemple dans US 2015/352504 et US 2004/240315, dans lesquels, au sein d'un bac rempli de liquide, un gaz est dispersé en de fines bulles dans une chambre ad hoc où est entraîné un agitateur mécanique.

KR 2003 007 6549, qui peut être considéré comme l'état de la technique le plus proche de l'invention, divulgue un procédé et une installation de traitement d'eaux usées, permettant d'en éliminer les nutriments, tels que les composés azotés et phosphorés. Pour ce faire, les eaux usées soient d'abord introduites dans un réacteur où elles sont mélangées, sous l'effet d'un agitateur, à un réactif contenant un agent alcalinisant, du magnésium et du phosphore, de manière à provoquer l'apparition de cristaux de struvite dans le réacteur. Ces cristaux de struvite, qui, par définition, présentent une faible densité, sont évacués de la région de surface du réacteur par une conduite de sortie qui débouche dans un réacteur, plus précisément dans un conduit vertical central de ce dernier. Les cristaux de struvite servent alors de support pour des réactions de précipitation, jusqu'à former des agrégats qui tombent dans le fond du réacteur.

Le but de la présente invention est de proposer un procédé et une installation pour le traitement d'eau, qui remédient à la problématique de précipitations anarchiques de manière simple et efficace.

A cet effet, l'invention a pour objet un procédé pour le traitement d'eau, tel que défini à la revendication 1.

L'invention a également pour objet une installation pour le traitement d'eau, telle que définie à la revendication 7.

L'idée à la base de l'invention est de chercher à provoquer la précipitation, par apparition de nuclei ou de cristaux, dans une région « maîtrisée » du volume interne du bac de mélange des flux du traitement d'eau. Pour ce faire, l'invention prévoit qu'au moins un flux d'un réactif, qui est destiné à être mélangé dans le bac avec des eaux à traiter et qui, en pratique, est liquide, est introduit dans ce bac en y étant reçu dans une enceinte, qui est agencée dans le volume interne du bac et qui peut être qualifiée de semi-ouverte dans le sens où les eaux à traiter, le réactif et leur mélange peuvent circuler depuis et vers le volume interne de l'enceinte au travers d'une paroi ajourée de cette enceinte. Dans cette enceinte semi-ouverte, on favorise l'apparition de nuclei ou de cristaux, par application d'une agitation vigoureuse du volume interne de cette enceinte alors que ce volume concentre les espèces à faire réagir pour provoquer une nucléation, en étant en condition de sursaturation pour le réactif qu'il contient : cette agitation déstabilise le mélange sursaturé, ce qui induit une nucléation instantanée et substantielle dans le volume de l'enceinte. L'invention ne prévoit pas d'appliquer cette agitation vigoureuse dans tout le volume interne du bac car cette approche serait contraire à l'économie opératoire dans le sens où la puissance totale d'agitation à dépenser devrait alors être très élevée. Au contraire, l'invention prévoit astucieusement que seul le volume interne de l'enceinte semi-ouverte soit soumis à l'agitation vigoureuse, en appliquant une puissance d'agitation qui, ramenée au volume interne de l'enceinte semi-ouverte, est comprise entre 0,5 et 3 kW/m³, étant remarqué que cela n'empêche pas de prévoir une agitation dans le volume interne du bac à l'extérieur de l'enceinte semi-ouverte, mais avec une puissance volumique, c'est-à-dire ramenée au volume interne du bac, qui est bien moindre, par exemple à des fins de brassage et/ou de maintien en suspension. Ainsi, le volume interne de l'enceinte semi-ouverte reçoit, comparativement au reste du bac, une énergie d'agitation présentant une forte densité, qui provoque, par cisaillement hydraulique, une nucléation quasi-immédiate et donc l'apparition de nucléi ou de cristaux dans le volume interne de l'enceinte semi-ouverte. Dans tous les cas, comme l'intérieur de cette enceinte semi-ouverte communique avec la partie du volume interne du bac, située à l'extérieur de l'enceinte semi-ouverte, la croissance des cristaux peut continuer dans tout le volume interne du bac, cette croissance cristalline se produisant sur les nuclei en solution dans le bac, et non pas sur les parois du bac et/ou dans des unités en aval du bac. Les risques de retard à la précipitation sont ainsi limités. En particulier, l'encroutage du bac et d'éventuelles unités aval est ainsi évité.

Des caractéristiques additionnelles avantageuses du procédé et/ou de l'installation conformes à l'invention sont spécifiées aux revendications dépendantes.

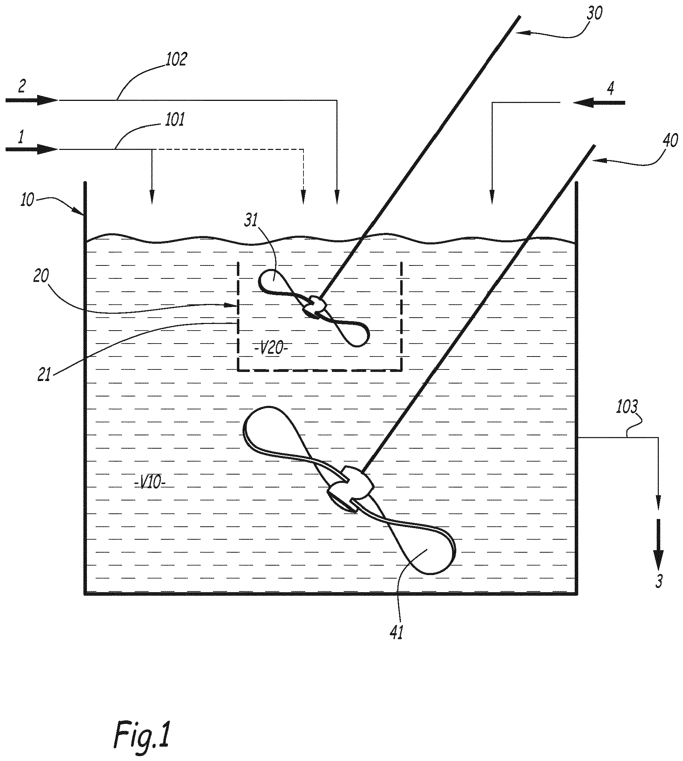

L'invention sera mieux comprise à la lecture de la description qui va suivre, donnée uniquement à titre d'exemple et faite en se référant aux dessins sur lesquels la figure 1 est un schéma d'une installation pour le traitement d'eau.

L'installation de la figure 1 comporte un bac 10 prévu pour y faire un mélange de plusieurs flux et y opérer une précipitation d'au moins certaines espèces de ce mélange. La forme de réalisation du bac 10 n'est pas limitative du moment que les différents flux à mélanger dans le bac peuvent être introduits à l'intérieur de ce dernier et que le mélange en résultant peut en être évacué. En pratique, le bac 10 inclut des parois pleines, notamment un fond, par exemple plat, et une paroi latérale s'élevant depuis le fond, cette paroi latérale pouvant par exemple être à profil transversal rond, rectangulaire ou autre. Dans tous les cas, le bac 10 délimite un volume interne V10 dans lequel le mélange et la précipitation susmentionnés sont opérés.

Selon un procédé mis en œuvre par l'installation de la figure 1, un flux 1 d'eaux à traiter est introduit dans le volume interne V10 du bac 10, la provenance de ces eaux à traiter n'étant pas limitative de l'invention.

De plus, un flux 2 d'un réactif, typiquement liquide, est également introduit dans le volume interne V10 du bac 10, ce réactif étant prévu pour, par mélange avec les eaux à traiter, créer une situation qui donne naissance à la précipitation. A titre d'exemples non limitatifs, le réactif du flux 2 modifie le pH des eaux du flux 1 et induit dans le mélange en résultant la précipitation d'hydroxydes, ou bien le réactif du flux 2 apporte un cation ou un anion qui, par réaction avec d'autres ions ou espèces des eaux du flux 1, crée une situation où une solubilité est dépassée dans le mélange en résultant.

Dans tous les cas, le flux 1 d'eaux à traiter et le flux 2 du réactif sont introduits, de manière distincte, dans le volume interne V10 du bac 10 par des moyens d'amenée respectifs 101 et 102, tels que des canalisations, des tuyaux ou similaires, qui, le cas échéant, sont équipés de vannes de commande de débit. Les eaux à traiter provenant du flux 1 et le réactif provenant du flux 2 se mélangent dans le volume interne V10 du bac 10, avant d'en être évacués sous forme d'un flux 3 de mélange évacué, et ce par des moyens d'évacuation 103, là encore tels qu'une canalisation, un tuyau ou similaire. En service, c'est-à-dire lors de la mise en œuvre normale du procédé, une grande part, voire la quasi-totalité du volume interne V10 du bac 10 est occupée par le mélange des eaux provenant du flux 1 et du réactif provenant du flux 2 : le niveau de ce mélange s'établit à une hauteur nominale, tout en variant légèrement au-dessus et/ou en-dessous de cette hauteur nominale selon les débits instantanés respectifs des eaux dans les moyens d'amenée 101, du réactif dans les moyens d'amenée 102, et du mélange évacué dans les moyens d'évacuation 103.

Selon l'invention, l'installation de la figure 1 comporte également une enceinte semi-ouverte 20 qui est disposée dans le volume interne V10 du bac 10. Cette enceinte semi-ouverte 20 délimite un volume interne V20 qui est bien plus petit que le volume interne V10 du bac 10. Suivant un dimensionnement préférentiel dont l'intérêt apparaîtra plus loin, le volume interne V20 de l'enceinte semi-ouverte 20 représente entre 1/1000^{ième} et 1/50^{ième} du volume interne V10 du bac 10.

Dans tous les cas, le volume interne V20 de l'enceinte semi-ouverte 20 n'est pas totalement séparé du volume interne V10 du bac 10, dans le sens où une paroi 21 de l'enceinte semi-ouverte 20 est ajourée de manière que l'intérieur et l'extérieur de cette enceinte puissent communiquer l'un avec l'autre au travers de cette paroi ajourée 21. Ainsi, au travers de la paroi ajourée 21, le volume interne V20 de l'enceinte 20 communique avec la partie du volume interne V10 du bac 10, située à l'extérieur de l'enceinte 20. En pratique, la forme de réalisation de l'enceinte 20 et de sa paroi ajourée 21 n'est pas limitative de l'invention du moment que, tout en délimitant physiquement le volume interne V20 au sein du volume interne V10, l'enceinte semi-ouverte 20 autorise la communication hydraulique entre ces volumes internes V20 et V10 via les ouvertures de sa paroi ajourée 21. A cet effet, suivant un dimensionnement préférentiel, pratique et efficace, les ouvertures de la paroi ajourée 21 représentent entre 30 et 70% de la paroi 21 et présentent des diamètres hydrauliques équivalents compris entre 15 et 50 mm. A titre d'exemples non limitatifs, l'enceinte semi-ouverte 20 est constituée d'un panier perforé, d'une tôle grillagée ou de plaques trouées assemblées.

Quelle que soit la forme de réalisation de l'enceinte semi-ouverte 21, cette dernière est prévue pour recevoir le flux 2 du réactif lors de son introduction dans le volume interne V10 du bac 10 par les moyens d'amenée 102. Il en résulte d'ailleurs que la concentration effective qui règne dans le volume interne V20 de l'enceinte semi-ouverte 20 peut ainsi être différente, voire substantiellement différente, de celle qui règne dans le reste du volume interne V10 du bac 10 et dans le flux 3 de mélange évacué, et ce pour un ou plusieurs ions ou espèces. En particulier, le réactif du flux 2 est en surconcentration dans le volume interne V20 comparativement au reste du volume V10, le mélange présent dans ce volume V20 se retrouvant sursaturé en ion(s) ou espèce(s) du réactif 2. A cet effet, plusieurs agencements opératoires entre l'enceinte semi-ouverte 20 et les moyens d'amenée 102 sont envisageables. Par exemple, les moyens d'amenée 102 peuvent déboucher directement dans le volume interne V20 de l'enceinte 20 : dans ce cas, les moyens d'amenée 102 peuvent, par exemple, consister en une conduite d'amenée du réactif 2, qui est agencée pour partie dans le bac et qui s'étend depuis l'extérieur du bac 10 jusqu'à l'intérieur de l'enceinte 20 en traversant la paroi de cette dernière. Selon un autre exemple, qui est illustré par la figure 1, l'enceinte 20 présente un sommet ouvert et les moyens d'amenée 102 débouchent au-dessus de ce sommet de l'enceinte 20, tout en dirigeant à leur sortie le flux 2 vers l'intérieur de l'enceinte 20, et ce même si le niveau effectif du mélange dans le bac 10 est au-dessus du sommet de l'enceinte 20, en immergeant totalement le volume interne V20 de cette dernière. Plus globalement, il y a lieu de comprendre que la totalité du flux 2 ou bien l'essentiel du flux 2, c'est-à-dire au moins 50%, voire au moins 75% du flux 2, est, à la sortie des moyens d'amenée 102, introduit directement dans le volume interne V20 de l'enceinte semi-ouverte 20, c'est-à-dire reçu dans le volume interne V20 sans préalablement passer par le reste du volume interne V10 du bac 10 hormis, le cas échéant, au travers de la portion du mélange interposée verticalement entre le niveau effectif de ce mélange dans le bac et le sommet ouvert de l'enceinte 20 lorsque cette dernière est totalement immergée, cette portion du mélange ayant, en pratique, une épaisseur que de quelques millimètres ou centimètres. En d'autres termes, même dans le cas où l'enceinte semi-ouverte 20 a son sommet ouvert et est totalement immergée dans le mélange remplissant au moins partiellement le volume interne V10 du bac 10 comme sur la figure 1, l'essentiel voire la totalité du flux 2 est introduit dans le volume interne V10 du bac en étant d'abord reçu dans le volume interne V20 de l'enceinte semi-ouverte 20, avant de pouvoir ensuite rejoindre tout le reste du volume interne V10 par circulation au travers de la paroi ajourée 21 et, le cas échéant, par débordement de l'enceinte semi-ouverte 20.

Egalement selon l'invention, l'intérieur de l'enceinte semi-ouverte 20 est soumis à une agitation vigoureuse dont la puissance volumique est comprise entre 0,5 et 3 kW par m³ du volume interne V20 de l'enceinte 20. Cette forte puissance dissipée à l'intérieur de l'enceinte semi-ouverte 20, ainsi que le fort cisaillement qui en résulte, provoquent une déstabilisation du mélange sursaturé présent dans le volume interne V20 de l'enceinte 20 et, de ce fait, une nucléation quasi-immédiate et ainsi l'apparition de nuclei ou de cristaux dans ce volume V20. Dans la mesure où, comme expliqué en détail plus haut, l'enceinte semi-ouverte 20 communique avec le reste du volume interne V10 du bac 10, les cristaux apparus dans le volume interne V20 de l'enceinte 20 peuvent continuer de croître à l'extérieur de l'enceinte 20, autrement dit dans tout le reste du volume interne V10 du bac 10, cette croissance cristalline se produisant ainsi sur les nuclei en suspension dans le mélange, et non pas sur les parois du bac 10. Puis, le mélange ainsi chargé en cristaux peut s'échapper du bac 10 sous forme du flux 3 de mélange évacué, en étant dirigé, le cas échéant, vers des unités de traitement situées en aval du bac 10, ces unités aval étant, comme les parois du bac 10, non sujettes à encroutage du fait que la croissance des cristaux est réalisée sur les nuclei en suspension dans le bac. Ainsi, on comprend que l'agitation vigoureuse opérée dans le volume interne V20 de l'enceinte semi-ouverte 20 permet d'éviter des retards à la précipitation : en l'absence de l'enceinte semi-ouverte 20 et de l'agitation vigoureuse qui y est opérée, de tels retards pourraient se produire dans le bac 10 du fait qu'une sursaturation peut se maintenir pendant un certain temps dans le mélange remplissant le bac 10, selon les concentrations de chaque espèce ou ion présent dans ce mélange.

Afin d'opérer l'agitation de l'intérieur de l'enceinte 20, l'installation comporte des moyens d'agitation 30 qui, au moins pour leur partie active, sont disposés dans le volume interne V20 de l'enceinte 20. La puissance volumique mentionnée plus haut, c'est-à-dire comprise entre 0,5 et 3 kW par m³ du volume interne V20 de l'enceinte 20, est la puissance effective dispersée par les moyens d'agitation 30, ramenée au volume de matière agité par ces moyens d'agitation.

Suivant une forme de réalisation pratique, illustrée par la figure 1, les moyens d'agitation 30 incluent un agitateur 31, qui est disposé dans le volume interne V20 de l'enceinte semi-ouverte 20 et qui y disperse la forte puissance volumique susmentionnée. Comme le volume interne V20 de l'enceinte 20 est limité, notamment comparativement au volume interne V10 du bac 10, les moyens d'agitation 30, en particulier leur agitateur 31, ont l'avantage de pouvoir présenter un dimensionnement économique et de ne consommer qu'une faible quantité d'énergie, tout en garantissant la forte puissance volumique, c'est-à-dire la puissance ramenée sur le volume interne V20 de l'enceinte 20, mentionnée plus haut. Ainsi, suivant une forme de réalisation particulièrement avantageuse, l'agitateur 31 présente un nombre de puissance élevé : à cet effet, l'agitateur 31 est par exemple une turbine de Rushton ou, plus généralement, comporte des pales droites. Ceci étant, d'autres types d'agitateur peuvent être employés pour l'agitateur 31 des moyens d'agitation 30, par exemple des agitateurs à pales inclinées ou à hélice.

Suivant un aménagement optionnel, qui est mis en œuvre dans l'installation de la figure 1, cette installation comporte également des moyens d'agitation 40 permettant d'agiter, à l'extérieur de l'enceinte semi-ouverte 20, l'intérieur du bac 10, ces moyens d'agitation 40 comprenant un agitateur 41 disposé dans la partie du volume interne V10 du bac 10, non occupée par l'enceinte 20. Les moyens d'agitation 40 sont prévus pour assurer le brassage du mélange contenu dans le bac 10 et y maintenir en suspension les cristaux chargeant ce mélange. Ainsi, la fonction des moyens d'agitation 40 est différente de la fonction, expliquée plus haut, des moyens d'agitation 30 : en pratique, les moyens d'agitation 40 délivrent une puissance d'agitation, ramenée au volume interne V10 du bac 10, qui est bien moindre que la puissance volumique mentionnée plus haut, délivrée par les moyens d'agitation 30. A titre de comparaison, la puissance volumique dispersée par les moyens d'agitation 40 est inférieure à 0,4 kW par m³ du volume interne V10 du bac 10, par exemple comprise entre 0,1 et 0,4 kW par m³ du volume V10.

Par ailleurs, on notera que diverses variantes peuvent être envisagées concernant l'agencement relatif entre l'enceinte semi-ouverte 20 et le ou les points d'introduction du flux 1 des eaux à traiter dans le volume interne V10 du bac 10. Ainsi, comme indiqué en traits pleins sur la figure 1, le flux 1 introduit dans le volume interne V10 par les moyens d'amenée 101 peut être reçu à l'extérieur de l'enceinte semi-ouverte 20. De manière alternative, comme indiqué en pointillés sur la figure 1, le flux 1 introduit dans le volume V10 par les moyens d'amenée 101 est, pour partie, reçu à l'intérieur de l'enceinte 20 tandis que le reste est reçu à l'extérieur de cette enceinte.

De manière optionnelle, un ou plusieurs autres flux que les flux 1 et 2 peuvent être introduits dans le volume interne V10 du bac 10 pour y être mélangés ensemble, comme illustré, par exemple, par un flux 4 sur la figure 1. En pratique, ce flux 4 peut être introduit dans le volume V10 en étant soit directement reçu à l'intérieur ou à l'extérieur de l'enceinte 20, soit mélangé à l'un et/ou à l'autre des flux 1 et 2.

Ci-après, on donne deux exemples applicatifs de l'installation et du procédé décrits jusqu'ici.

### Premier exemple applicatif :

Le flux 1 d'eaux à traiter est constitué d'eaux contenant des sulfates tandis que le flux 2 du réactif contient de la chaux destinée, lors de son mélange avec les eaux contenant des sulfates, à réaliser un ajustement de pH. Du gypse, qui est peu soluble, est susceptible de cristalliser lors du mélange de ces deux flux. La forte puissance volumique de l'agitation opérée à l'intérieur de l'enceinte 2 permet d'y faire apparaître immédiatement des nuclei de gypse, sur lesquels la cristallisation de gypse peut se poursuivre. Ainsi, le gypse se dépose sur les cristaux en suspension dans le mélange puis est évacué du bac 10 sous forme de cristaux portés en suspension par le flux 3, sans que ce gypse n'encroute les parois du bac 10.

### Second exemple applicatif :

Le flux 1 d'eaux à traiter est constitué par des eaux fortement salines, riches en calcium et contenant des ions carbonates et bicarbonates, ainsi que des ions ammonium. Dans le but de procéder à un stripping subséquent de l'ammoniac, on cherche à mélanger dans le bac 10 ces eaux fortement salines avec de la soude caustique qui constitue le flux 2 du réactif, afin d'élever le pH du mélange contenu dans le bac 10 à une valeur d'environ 10. La présence des ions calcium, carbonates et bicarbonates, ainsi que, dans une moindre mesure, des ions sulfates, fait que l'augmentation du pH provoque l'apparition de précipités de carbonates de calcium, qui co-précipitent éventuellement avec du sulfate et du bicarbonate de calcium et qui, dans tous les cas, présentent de manière naturelle un fort retard à la précipitation. En l'absence de l'enceinte semi-ouverte 20 et de l'agitation vigoureuse qui y est appliquée, on observerait rapidement des dépôts sur les parois du bac 10, ainsi que dans les moyens d'évacuation 103 et dans les unités en aval du bac 10. Grâce à la forte puissance volumique dissipée à l'intérieur de l'enceinte 20 et du fort cisaillement qui en résulte dans le volume interne V20 de l'enceinte 20, des nucléi et cristaux de carbonate de calcium apparaissent quasi-immédiatement à l'intérieur de l'enceinte semi-ouverte 20 puis croissent à l'extérieur de cette enceinte, en servant de support pour la croissance d'autres cristaux à venir. De cette manière, une précipitation anarchique sur les parois du bac 10 et en aval de ce dernier est évitée.

## Revendications

1. Procédé pour le traitement d'eau,
dans lequel un premier flux (1) d'eaux à traiter et un second flux (2) d'un réactif sont chacun introduits dans le volume interne (V10) d'un bac (10) pour y être mélangés, le réactif étant prévu pour, par mélange avec les eaux à traiter, créer une situation qui provoque une précipitation,
et dans lequel une enceinte semi-ouverte (20) est disposée dans le volume interne du bac (10), l'intérieur de l'enceinte semi-ouverte (20) étant soumis à une agitation,
**caractérisé en ce que** l'enceinte semi-ouverte (20) comprend une paroi ajourée (21) ayant des ouvertures par lesquelles le volume interne (V20) de l'enceinte semi-ouverte communique avec la partie du volume interne (V10) du bac, située à l'extérieur de l'enceinte semi-ouverte, de manière que, dans le bac (10), les eaux à traiter, le réactif et leur mélange peuvent circuler depuis et vers le volume interne de l'enceinte semi-ouverte au travers de la paroi ajourée,
**en ce que** la puissance volumique de l'agitation à laquelle est soumis l'intérieur de l'enceinte semi-ouverte (20) est comprise entre 0,5 et 3 kW par m³ du volume interne (V20) de l'enceinte semi-ouverte,
et **en ce qu'**au moins une partie du premier flux (1) est introduite dans le volume interne (V10) du bac en étant reçue à l'extérieur de l'enceinte semi-ouverte (20) tandis que le second flux (2) est introduit dans le volume interne (V10) du bac (10) en étant reçu à l'intérieur de l'enceinte semi-ouverte (20) de manière à sursaturer en réactif le volume interne (V20) de l'enceinte semi-ouverte, de sorte que la puissance d'agitation dissipée à l'intérieur de l'enceinte semi-ouverte provoque, par cisaillement hydraulique, une nucléation et ainsi l'apparition de nuclei ou de cristaux dans le volume interne (V20) de l'enceinte semi-ouverte, avant que ces nuclei ou cristaux rejoignent, par circulation au travers de la paroi ajourée (21), le reste du volume interne (V10) du bac (10) où ils croissent en servant de support de croissance cristalline.

2. Procédé suivant la revendication 1, dans lequel le volume interne (V20) de l'enceinte semi-ouverte (20) représente entre 1/1000^{ième} et 1/50^{ième} du volume interne (V10) du bac (10).

3. Procédé suivant l'une des revendications 1 ou 2, dans lequel l'agitation à laquelle est soumis l'intérieur de l'enceinte semi-ouverte (20) est opérée par un agitateur (31), qui est disposé dans le volume interne (V20) de l'enceinte semi-ouverte et qui comporte des pales droites.

4. Procédé suivant la revendication 3, dans lequel l'agitateur (30) est une turbine de Rushton.

5. Procédé suivant l'une quelconque des revendications précédentes, dans lequel l'intérieur du bac (10) est, à l'extérieur de l'enceinte semi-ouverte (20), soumis à une agitation dont la puissance volumique est inférieure à 0,4 kW par m³ du volume interne (V10) du bac (10).

6. Procédé suivant l'une quelconque des revendications précédentes, dans lequel une partie du premier flux (1) est introduite dans le volume interne (V10) du bac (10) en étant reçue à l'intérieur de l'enceinte semi-ouverte (20).

7. Installation pour le traitement d'eau par précipitation, comprenant :
- un bac de mélange (10),
- des premiers moyens d'amenée (101) adaptés pour introduire un flux (1) d'eaux à traiter dans le volume interne (V10) du bac (10),
- des seconds moyens d'amenée (102) adaptés pour introduire un flux (2) d'un réactif dans le volume interne (V10) du bac (10), le réactif étant prévu pour, par mélange avec les eaux à traiter, créer une situation qui provoque une précipitation,
- une enceinte semi-ouverte (20) qui est disposée dans le volume interne (V10) du bac (10), et
- des moyens d'agitation (30) adaptés pour agiter l'intérieur de l'enceinte semi-ouverte (20)
**caractérisée en ce que** l'enceinte semi-ouverte (20) comprend une paroi ajourée (21) ayant des ouvertures par lesquelles le volume interne (V20) de l'enceinte semi-ouverte communique avec la partie du volume interne du bac, située à l'extérieur de l'enceinte semi-ouverte, de manière que, dans le bac (10), les eaux à traiter, le réactif et leur mélange peuvent circuler depuis et vers le volume interne de l'enceinte semi-ouverte au travers de la paroi ajourée,
**en ce que** les moyens d'agitation (30) sont prévus pour agiter l'intérieur de l'enceinte semi-ouverte (20) avec une puissance volumique qui est comprise entre 0,5 et 3 kW par m³ du volume interne (V20) de l'enceinte semi-ouverte,
et **en ce que** l'installation est prévue pour que :
- au moins une partie du flux (1) des eaux à traiter introduit dans le volume interne (V10) du bac (10) par les premiers moyens d'amenée (101) est reçue à l'extérieur de l'enceinte semi-ouverte (20),
- le flux (2) du réactif introduit dans le volume interne (V10) du bac (10) par les seconds moyens d'amenée (102) est reçu à l'intérieur de l'enceinte semi-ouverte (20) de manière à sursaturer en réactif le volume interne (V20) de l'enceinte semi-ouverte, et
- la puissance d'agitation dissipée à l'intérieur de l'enceinte semi-ouverte par les moyens d'agitation (30) provoque, par cisaillement hydraulique, une nucléation et ainsi l'apparition de nuclei ou de cristaux dans le volume interne (V20) de l'enceinte semi-ouverte, avant que ces nuclei ou cristaux rejoignent, par circulation au travers de la paroi ajourée (21), le reste du volume interne (V10) du bac (10) où ils croissent en servant de support de croissance cristalline.

8. Installation suivant la revendication 7, dans laquelle le volume interne (V20) de l'enceinte semi-ouverte (20) représente entre 1/1000^{ième} et 1/50^{ième} du volume interne (V10) du bac (10).

9. Installation suivant l'une des revendications 7 ou 8, dans laquelle les ouvertures de la paroi ajourée (21) de l'enceinte semi-ouverte (20) représentent entre 30 et 70% de la paroi ajourée et présentent un diamètre hydraulique équivalent compris entre 15 et 50 mm.

10. Installation suivant l'une quelconque des revendications 7 à 9, dans laquelle les moyens d'agitation (30) comprennent un agitateur (31) qui est disposé dans le volume interne (V20) de l'enceinte semi-ouverte (20).

11. Installation suivant la revendication 10, dans laquelle l'agitateur (31) comporte des pales droites.

12. Installation suivant la revendication 11, dans laquelle l'agitateur (31) est une turbine de Rushton.

## Patentansprüche

1. Verfahren zur Wasseraufbereitung,
bei dem ein erster Strom (1) des aufzubereitenden Wassers und ein zweiter Strom (2) eines Reagens jeweils in das Innenvolumen (V10) eines Behälters (10) eingeleitet werden, um darin gemischt zu werden, wobei das Reagens vorgesehen ist, um, durch Mischen mit dem aufzubereitenden Wasser, eine Situation zu schaffen, die eine Ausfällung bewirkt,
und bei dem ein halb-offenes Gehäuse (20) in dem Innenvolumen des Behälters (10) angeordnet wird, wobei das Innere des halb-offenen Gehäuses (20) einem Rühren unterzogen wird,
**dadurch gekennzeichnet, dass** das halb-offene Gehäuse (20) eine durchbrochene Wand (21) umfasst, die Öffnungen aufweist, durch die das Innenvolumen (V20) des halb-offenen Gehäuses mit dem Teil des Innenvolumens (V10) des Behälters kommuniziert, der sich außerhalb des halb-offenen Gehäuses befindet, in der Form, dass, in dem Behälter (10), das aufzubereitende Wasser, das Reagens und deren Gemisch von dem Innenvolumen des halb-offenen Gehäuses weg und zu diesem hin durch die durchbrochene Wand hindurch zirkulieren können,
dadurch, dass die Volumenleistungsdichte des Rührens, dem das Innere des halb-offenen Gehäuses (20) unterzogen wird, zwischen 0,5 und 3 kW pro m³ des Innenvolumens (V20) des halb-offenen Gehäuses beträgt,
und dadurch, dass wenigstens ein Teil des ersten Stroms (1) in das Innenvolumen (V10) des Behälters (10) eingeleitet wird, indem er außerhalb des halb-offenen Gehäuses (20) aufgenommen wird, während der zweite Strom (2) in das Innenvolumen (V10) des Behälters (10) eingeleitet wird, indem er innerhalb des halb-offenen Gehäuses (20) aufgenommen wird, in der Form, dass das Innenvolumen (V20) des halb-offenen Gehäuses mit Reagens so übersättigt wird, dass die in das Innere des halb-offenen Gehäuses abgegebene Rührleistung, durch hydraulische Abscherung, eine Keimbildung und auf diese Weise das Auftreten von Keimen oder von Kristallen in dem Innenvolumen (V20) des halb-offenen Gehäuses bewirkt, bevor diese Keime oder Kristalle, durch Zirkulation durch die durchbrochene Wand (21) hindurch, mit dem übrigen Innenvolumen (V10) des Behälters (10) zusammentreffen, wo sie wachsen, indem sie als Kristallwachstumsträger dienen.

2. Verfahren nach Anspruch 1, bei dem das Innenvolumen (V20) des halb-offenen Gehäuses (20) zwischen 1 Tausendstel und 1 Fünfzigstel des Innenvolumens (V10) des Behälters (10) beträgt.

3. Verfahren nach einem der Ansprüche 1 oder 2, bei dem das Rühren, dem das Innere des halb-offenen Gehäuses (20) unterzogen wird, durch ein Rührwerk (31) durchgeführt wird, das in dem Innenvolumen (V20) des halb-offenen Gehäuses angeordnet ist und das gerade Blätter aufweist.

4. Verfahren nach Anspruch 3, bei dem das Rührwerk (31) eine Rushton-Turbine ist.

5. Verfahren nach einem der vorhergehenden Ansprüche, bei dem das Innere des Behälters (10), außerhalb des halb-offenen Gehäuses (20), einem Rühren unterzogen wird, dessen Volumenleistungsdichte kleiner als 0,4 kW pro m³ des Innenvolumens (V10) des Behälters (10) ist.

6. Verfahren nach einem der vorhergehenden Ansprüche, bei dem ein Teil des ersten Stroms (1) in das Innenvolumen (V10) des Behälters (10) eingeleitet wird, indem er innerhalb des halb-offenen Gehäuses (20) aufgenommen wird.

7. Vorrichtung zur Wasseraufbereitung durch Ausfällung, umfassend:
- einen Mischbehälter (10),
- erste Zuleitungsmittel (101), die ausgebildet sind, um einen Strom (1) des aufzubereitenden Wassers in das Innenvolumen (V10) des Behälters (1) einzuleiten,
- zweite Zuleitungsmittel (102), die ausgebildet sind, um einen Strom (2) eines Reagens in das Innenvolumen (V10) des Behälters (1) einzuleiten, wobei das Reagens vorgesehen ist, um, durch Mischen mit dem aufzubereitenden Wasser, eine Situation zu schaffen, die eine Ausfällung bewirkt,
- ein halb-offenes Gehäuse (20), das in dem Innenvolumen (V10) des Behälters (10) angeordnet ist, und
- Rührmittel (30), die ausgebildet sind, um das Innere des halb-offenen Gehäuses (20) zu rühren,
**dadurch gekennzeichnet, dass** das halb-offene Gehäuse (20) eine durchbrochene Wand (21) umfasst, die Öffnungen aufweist, durch die das Innenvolumen (V20) des halb-offenen Gehäuses mit dem Teil des Innenvolumens des Behälters kommuniziert, der sich außerhalb des halb-offenen Gehäuses befindet, in der Form, dass, in dem Behälter (10), das aufzubereitende Wasser, das Reagens und deren Gemisch von dem Innenvolumen des halb-offenen Gehäuses weg und zu diesem hin durch die durchbrochene Wand hindurch zirkulieren können,
dadurch, dass die Rührmittel (30) vorgesehen sind, um das Innere des halb-offenen Gehäuses (20) mit einer Volumenleistungsdichte zu rühren, die zwischen 0,5 und 3 kW pro m³ des Innenvolumens (V20) des halb-offenen Gehäuses beträgt,
und dadurch, dass die Vorrichtung so vorgesehen ist, dass:
- wenigstens ein Teil des Stroms (1) des aufzubereitenden Wassers, der durch die ersten Zuleitungsmittel (101) in das Innenvolumen (V10) des Behälters (10) eingeleitet wird, außerhalb des halb-offenen Gehäuses (20) aufgenommen wird,
- der Strom (2) des Reagens, der durch die zweiten Zuleitungsmittel (102) in das Innenvolumen (V10) des Behälters (10) eingeleitet wird, innerhalb des halb-offenen Gehäuses (20) aufgenommen wird, in der Form, dass das Innenvolumen (V20) des halb-offenen Gehäuses mit Reagens übersättigt wird, und
- dass die im Inneren des halb-offenen Gehäuses durch die Rührmittel (30) abgegebene Rührleistung, durch hydraulische Abscherung, eine Keimbildung und auf diese Weise das Auftreten von Keimen oder von Kristallen in dem Innenvolumen (20) des halb-offenen Gehäuses bewirkt, bevor diese Keime oder Kristalle, durch Zirkulation durch die durchbrochene Wand (21) hindurch, mit dem übrigen Innenvolumen (V10) des Behälters (10) zusammentreffen, wo sie wachsen, indem sie als Kristallwachstumsträger dienen.

8. Vorrichtung nach Anspruch 7, wobei das Innenvolumen (V20) des halb-offenen Gehäuses (20) zwischen 1 Tausendstel und 1 Fünfzigstel des Innenvolumens (V10) des Behälters (10) beträgt.

9. Vorrichtung nach einem der Ansprüche 7 oder 8, wobei die Öffnungen der durchbrochenen Wand (21) des halb-offenen Gehäuses (20) zwischen 30 und 70 % der durchbrochenen Wand (21) darstellen und einen äquivalenten hydraulischen Durchmesser aufweisen, der zwischen 15 und 50 mm beträgt.

10. Vorrichtung nach einem der Ansprüche 7 bis 9, wobei die Rührmittel (30) ein Rührwerk (31) umfassen, das in dem Innenvolumen (V20) des halb-offenen Gehäuses (20) angeordnet ist.

11. Vorrichtung nach Anspruch 10, wobei das Rührwerk (31) gerade Blätter aufweist.

12. Vorrichtung nach Anspruch 11, wobei das Rührwerk (31) eine Rushton-Turbine ist.

## Claims

1. Method for water treatment,
in which a first flow (1) of water to be treated and a second flow (2) of a reagent are each introduced into the internal volume (V10) of a vat (10) in order to be mixed there, the reagent being provided in order, by mixing with the water to be treated, to create a situation which causes a precipitation,
and in which a semi-open chamber (20) is disposed in the internal volume of the vat (10), the inside of the semi-open chamber (20) being subjected to agitation,
**characterised in that** the semi-open chamber (20) comprises a perforated wall (21) having openings via which the internal volume (V20) of the semi-open chamber communicates with the part of the internal volume (V10) of the vat, situated outside the semi-open chamber, so that, in the vat (10), the water to be treated, the reagent and their mixture can circulate from and towards the internal volume of the semi-open chamber through the perforated wall,
**in that** the volume power of the agitation to which the inside of the semi-open chamber (20) is subjected is between 0.5 and 3 kW per m³ of the internal volume (V20) of the semi-open chamber,
and **in that** at least a part of the first flow (1) is introduced into the internal volume (V10) of the vat by being received outside the semi-open chamber (20) whilst the second flow (2) is introduced into the internal volume (V10) of the vat (10) by being received inside the semi-open chamber (20) so as to supersaturate, with reagent, the internal volume (V20) of the semi-open chamber so that the agitation power dissipated inside the semi-open chamber causes, by hydraulic shearing, a nucleation and hence the appearance of nucleii or crystals in the internal volume (V20) of the semi-open chamber, before these nucleii or crystals rejoin, via circulation through the perforated wall (21), the remainder of the internal volume (V10) of the vat (10) where they grow by serving to support the crystalline growth.

2. Method according to claim 1, in which the internal volume (V20) of the semi-open chamber (20) represents between 1/1000^{th} and 1/50^{th} of the internal volume (V10) of the vat (10).

3. Method according to one of the claims 1 or 2, in which the agitation to which the inside of the semi-open chamber (20) is subjected is carried out by an agitator (31) which is disposed in the internal volume (V20) of the semi-open chamber and which comprises straight blades.

4. Method according to claim 3, in which the agitator (30) is a Rushton turbine.

5. Method according to any of the preceding claims, in which the inside of the vat (10) is, outside the semi-open chamber (20), subjected to an agitation, the volume power of which is less than 0.4 kW per m³ of the internal volume (V10) of the vat (10).

6. Method according to any of the preceding claims, in which a part of the first flow (1) is introduced into the internal volume (V10) of the vat (10) by being received inside the semi-open chamber (20).

7. Installation for water treatment by precipitation, comprising:
- a mixing vat (10),
- first feeding means (101) adapted to introduce a flow (1) of water to be treated into the internal volume (V10) of the vat (10),
- second feeding means (102) adapted to introduce a flow (2) of a reagent into the internal volume (V10) of the vat (10), the reagent being provided in order, by mixing with the water to be treated, to create a situation which causes a precipitation,
- a semi-open chamber (20) which is disposed in the internal volume (V10) of the vat (10), and
- agitation means (30) adapted to agitate the inside of the semi-open chamber (20),
**characterised in that** the semi-open chamber (20) comprises a perforated wall (21) having openings via which the internal volume (V20) of the semi-open chamber communicates with the part of the internal volume of the vat, situated outside the semi-open chamber, so that, in the vat (10), the water to be treated, the reagent and their mixture can circulate from and towards the internal volume of the semi-open chamber through the perforated wall,
and **in that** the agitation means (30) are provided in order to agitate the inside of the semi-open chamber (20) with a volume power which is between 0.5 and 3 kW per m³ of the internal volume (V20) of the semi-open chamber,
and **in that** the installation is provided in order that:
- at least a part of the flow (1) of the water to be treated introduced into the internal volume (V10) of the vat (10) by the first feeding means (101) is received outside the semi-open chamber (20),
- the flow (2) of the reagent introduced into the internal volume (V10) of the vat (10) by the second feeding means (102) is received inside the semi-open chamber (20) so as to supersaturate, with reagent, the internal volume (V20) of the semi-open chamber, and
- the agitation power dissipated inside the semi-open chamber by the agitation means (30) causes, by hydraulic shearing, a nucleation and hence the appearance of nucleii or crystals in the internal volume (V20) of the semi-open chamber, before these nucleii or crystals rejoin, via circulation through the perforated wall (21), the remainder of the internal volume (V10) of the vat (10) where they grow by serving to support the crystalline growth.

8. Installation according to claim 7, in which the internal volume (V20) of the semi-open chamber (20) represents between 1/1000^{th} and 1/50^{th} of the internal volume (V10) of the vat (10).

9. Installation according to one of the claims 7 or 8, in which the openings of the perforated wall (21) of the semi-open chamber (20) represent between 30 and 70% of the perforated wall and have an equivalent hydraulic diameter between 15 and 50 mm.

10. Installation according to any of the claims 7 to 9, in which the agitation means (30) comprise an agitator (31) which is disposed in the internal volume (V20) of the semi-open chamber (20).

11. Installation according to claim 10, in which the agitator (31) comprises straight blades.

12. Installation according to claim 11, in which the agitator (31) is a Rushton turbine.
